# EUROPEAN PATENT APPLICATION

(11) **EP 3 842 590 A1**
(43) Date of publication of application: **30.06.2021**
(21) Application number: 20216730.0
(22) Date of filing: 22.12.2020
(51) Int. Cl.: D21B 1/02, D21B 1/32

(54) **METHOD, SEPARATION SYSTEM AND UNPACKING DEVICE FOR PROCESSING PACKAGING UNITS**

(30) Priority: 23.12.2019 NL 2024555
(71) Applicant: Renes AGF Services B.V., 3076 JH Rotterdam (NL)
(72) Inventor: Renes, Frederik Klaas, 2991 BJ Barendrecht (NL)
(74) Representative: Nederlandsch Octrooibureau

(57) **Abstract**

A method for processing packaging units (8) formed of a package (14) and the included agricultural or horticultural products (15) using a separation system with an unpacking device (2). The unpacking device (2) includes a processing chamber (5) with a decomposition mechanism (3, 42, 43) and a removal assembly (21) with an output conduit (25) and a recirculation conduit (26). According to the method, the decomposition mechanism is actuated to open packaging units (8) within the processing chamber (5) and to press the released products (15) through a sieve (13a) to form an organic pulp (44), the organic pulp is transported via an output hopper (16) from the processing chamber (5), and a circulation stream (18) with organic pulp is transported via the recirculation conduit (26) back to the processing chamber (5), and is supplied in a regulated manner to the processing chamber to increase the moisture content of the organic pulp that is moving from the processing chamber through the sieve (13a) and the output hopper (16).

## Description

### Technical Field

The invention relates to a method for separating and unpacking packaging units that are comprised of the package itself and organic products accommodated in the package. Furthermore, the invention relates to an unpacking device and separation device for executing such a method.

### Background Art

Packaged products such as fruit, vegetables and the like are usually offered as complete packaging units with a box. The packaging usually consists of a cardboard or plastic box, in which products such as apples, oranges, melons, pineapples, tomatoes, mangos, grapes, onions, peppers and the like are accommodated. For various reasons, products may become damaged, or otherwise become unsuitable for consumption before the products arrive at the auction or in the shop. These types of parties with agricultural, pasture or horticultural products are then rejected and must be reprocessed and/or recycled in a responsible manner.

The packaging material, such as cardboard or plastic, is often particularly suitable for reuse if it is at least not too strongly contaminated with organic material. In addition, the organic material in the form of vegetal waste as biomass can be used for energy generation. Careful separation of the packaging and the packaged agricultural, farm or horticultural products is therefore very desirable from an ecological standpoint. It is therefore desirable to provide a method that can separate containing organic products in the most efficient manner possible in a separate waste stream for the packaging material and a separate discharge stream for the organic material of the packaged agricultural/pasture/horticultural products.

Patent document WO1996/27045A1 describes, among other things, a system that is set up for reclaiming paper pulp made up of layers from which beverage packages are constructed. This known system comprises a row of washing chambers in which rotatable perforated cylinders with vertical plates or blades suspended inside. In this known system, the beverage packages are introduced into the interior of the cylinders, after which the cylinders are rotated and the packages are soaked in the first chambers. Through a top-transfer scoop construction, the packages are transferred between the cylinders and through the chambers. During the rotation and soaking process, the paper component is soaked away from the plastic, and in the last chambers the paper and plastic layers are rinsed so that the paper flows out of the cylinders and is separated from the plastic. Then the paper pulp is separated from the rinse liquid and removed, while the liquid in the tanks is captured so that it can be pumped back to the chambers. This known system is unsuitable for separating packages with agricultural/pasture/horticultural products into a separate waste stream for packaging material and a separate discharge stream for organic pulp from the agricultural/pasture/horticultural products.

There are various separation systems and unpacking devices for processing these types of packaging units with agricultural/pasture/horticultural products. In practice, these types of rejected packaging units are often processed partially by machine and partially manually, and sometimes even completely by machine. However, it appears that a machine can become clogged if some of the packaging units are too dry or too wet. Without manual intervention, the separation process cannot continue in such a case. It is therefore desirable to provide a method and system in which the waste streams can be separated from each other, regardless of the moisture content and/or composition of the packaged agricultural/pasture/horticultural products.

### Summary of Invention

Therefore, according to a first aspect of the invention, there is provided a method for separating packaging units comprised of a package, such as a box, as well as the agricultural, farm or horticultural products accommodated inside the package, in a separate waste stream for packaging materials and a separate discharge stream for the organic material of the agricultural/pasture/horticultural products. The method can be performed using a separating system with an unpacking device, whereby the unpacking device has a processing chamber provided with:
- a supply opening on a top side of the processing chamber and adapted for inputting the packaging units;
- a first output opening adapted to discharge the separated packages from the processing chamber,
- a second output opening with an output hopper and a curved sieve on a bottom side of the processing chamber, and adapted for removing of organic pulp from the processing chamber. In addition, the unpacking device has a decomposition mechanism accommodated in the processing chamber, which is configured to open the packaging units and to transform the agricultural/pasture/horticultural products into the organic pulp, as well as a removal assembly that is provided with a pump system and having a first conduit for transporting the organic pulp out of the processing chamber. The decomposition mechanism may be equipped with an axle-shaped rotator body that extends along a centre-line, and which is suspended inside the processing chamber in a rotatable manner along this centre-line, as well as spoon-shaped processing members that are attached to the rotator body and extend radially from the rotator body and are adapted to form the released products into the organic pulp.

The method involves:
- supplying the packaging units through the supply opening into the processing chamber;
- actuating the decomposition mechanism to open the packages of the packaging units and to remove the organic products from the packages and subject released organic products to a reduction treatment to make the organic pulp of it and at the same time to move the opened packages in an downstream direction along a centre-line towards the first output opening. Here, the rotator body with the spoon-shaped processing members may be actuated in order to open the packages in the packaging units and to remove the agricultural/pasture/horticultural products from the packages, to pulverise the products released by using the spoon-shaped processing members of the rotator body, to push the products against the (stationary) curved sieve to create an organic pulp, and to simultaneously move the opened packages in a downstream direction along the centre-line towards the first output opening using a screw movement of the spoon-shaped processing members.

The process further involves:
- transporting the opened packages out of the processing chamber through the first output opening;
- transporting the organic pulp out of the processing chamber via the output hopper and through a sieve and collection of the organic pulp in an underlying storage space;
- actuating the pump unit to move the organic pulp out of the storage container, forming a stream of pulp through the first conduit.

The method is characterized by the first conduit of the removal assembly being connected to a branch where the first conduit splits into a removal conduit and a recirculation conduit, and that the method further involves:
- splitting the pulp stream at the level of the branch into a pulp discharge stream and a pulp circulation stream;
- removing the pulp discharge stream through the removal conduit for further processing outside the separation system;
- returning the pulp circulation stream through the recirculation conduit to the top of the processing chamber;
- supplying, in a regulated manner, the pulp circulation stream to the processing chamber via the top side to increase the moisture content of the organic pulp that is moving from the processing chamber through the curved sieve, the output hopper, and a further sieve.

The term "pulp" is used herein to describe the compressed organic material. This pulp is moist and fluid enough to be pumped by the pump unit out of the storage area. The term "sieve" is used herein to indicate a mainly two-dimensional pattern of through holes in a closed body. The sieve may for example be formed by a net, mesh or punched plate with openings. In a preferred embodiment, the body is plate-shaped and the holes are formed by a square grid with opening having a mesh width between 10 and 30 mm. Here, the pulp will pass predominantly through a plane. In other embodiments, the sieve may have a concave shape, wherein this includes openings in a flat plane as well as in side walls extending alongside it. Further, in some embodiments, the sieve can also be positioned at a different level inside the output hopper or on the bottom side of the processing chamber. In some embodiments, there may also be multiple sieves at various levels within the processing chamber and/or the output hopper.

The method in accordance with this aspect of the invention makes it possible to regulate the moisture content inside the processing chamber of the unpacking device. By adding extra moisture with the pump circulation stream to the load of packaging units having a low moisture content, the consistency of the stream is made more constant, which helps prevent transport problems inside the unpacking device such as clogging of the curved sieve and/or the further sieve.

A fraction that is too dry inside the processing chamber may cause clogging of the curved sieve and/or the further sieve, which in principle can be avoided by adjusting the curved sieve and/or further sieve depending on the type of food being processed. With wet material, a sieve with openings of 10-15 mm may for instance be used, and for dry material, a sieve with openings of 20-30 mm. The exchange of sieves can be made when large streams of a constant composition are being processed, but is less suitable when the loads of one type of product are relatively small so that the composition (in particular moisture content) of the processed streams varies significantly in time. If there are many types of loads, the curved sieve and/or further sieve may have to be changed several times per day, which causes unnecessary down-time of the machine during replacement.

By selective setting/adjustments of the pulp circulation system back to the processing chamber according to the first aspect of the invention, there will be no or less down-time of the separation system, and it is less often (or even never) required to manually solve transport problems, and the same type of sieve can be used in the processing of product streams with different compositions.

In addition, the moisture regulation ensures that the consistency of the pulp transport stream to the fermentation tank can be regulated, so that this consistency can be better adjusted for an effective fermentation.

In one embodiment of the method, the recirculation conduit of the output system is equipped with a manifold where the recirculation conduit splits into a number of conduit branches which are at successive positions along the centre-line in liquid connection with the processing chamber. Each branch conduit is equipped with an individually adjustable valve. The method according to this embodiment also includes selective opening and closing of the valves to supply fractions of the pulp circulation stream into the processing chamber at selected downstream positions along the centre-line.

An advantage of this embodiment is the flexibility in the ability to introduce moisture at various sites into the processing chamber. The different types of organic products can create various moisture contents during processing at different positions within the processing chamber. For some products, it is therefore desirable to add less moisture using the valve nearest to the intake opening. Most packages may for instance become damaged at the level of the intake opening, causing the release of a relatively high amount of moisture. By including various valves, one can regulate where the pulp circulation stream is supplied to the processing chamber.

In an additional embodiment, each valve can be placed in at least one intermediate position between the fully opened and fully closed position in order to influence the behaviour of the fractions. This not only regulates where in the processing chamber the pulp circulation stream is added, but also at which rate.

In one embodiment, the recirculation conduit of the discharge assembly has a main valve for the integral regulation of a magnitude of the pulp circulation stream. A method according to this embodiment further includes operating the main valve by varying the position of the main valve between a fully closed position in which the recirculation conduit is completely shut off, and the pulp circulation stream cannot flow, and a fully open position in which the pulp circulation stream can flow at a maximum. In this, the main valve can also be placed in at least one intermediate position between the fully open and fully closed positions, in which position the pulp circulation stream can partially flow.

The main valve can be used to control and/or dose the magnitude of the pulp circulation stream as a whole. An advantage of this is that when there is already sufficient moisture in the processing chamber, extra moisture does not necessarily have to be added, because the main valve can be used to completely shut off the pulp circulation stream.

In an additional embodiment, the main valve can also be placed in at least one intermediate position between the fully opened and fully closed positions. This type of intermediate position may, for example, be used for products with a moderate or average moisture content, such as apples, lettuce, or bananas.

In a further embodiment, the method involves placing the main valve in the fully closed position when processing the packaging units with the agricultural/pasture/horticultural products having a relatively high moisture content, such as chosen from the group of grapes, cucumbers, watermelons, celery, strawberries, pears and citrus fruits. An advantage of this is that no unnecessary extra moisture is added.

In another embodiment, the method involves placing the main valve in the fully open position or in at least one intermediate position, and the selective opening of the valves during the processing of the packaging units with the agricultural/pasture/horticultural products with a relatively high dry component. These type of products may, for example, be chosen from the group of sweet potatoes, coconuts, broccoli and carrots. With these types of product, it may be desirable to add extra moisture from the circulation channel to the processing chamber.

In an additional embodiment of the method, the return of the pulp circulation stream occurs through the recirculation conduit towards the top of the processing chamber under the influence of the pump unit. The pump unit can also be used for creating a vacuum in the first conduit with regard to the pressure in the processing chamber near the top side. This vacuum can, for example, be used for driving the pulp circulation stream upward through the recirculation conduit.

According to one embodiment of the method, the method further involves:
- providing a screw conveyor equipped for supplying packaging units with organic products to the intake opening of the unpacking unit, whereby the screw conveyor has a hopper on the lower end for receiving the packaging units, and a screw body for moving the packaging units along an at least partially liquid-tight channel to the top end located above the intake opening, and whereby the screw conveyor includes a drainage system for removing excess moisture from the at least partially liquid-tight channel;
- placing the packaging units via the hopper onto the screw conveyor;
- rotating of the conveyor body and thereby transporting the packaging units from the lower end, along the at least partially liquid-tight channel, to the intake opening;
- extracting, via the drainage system, excess moisture during transport of the packaging units, and
- collecting excess moisture drained via the drainage system in a collection container.

An advantage of this embodiment is that the moisture content can also be partially regulated before the packaging units enter the unpacking device. The moisture regulation in the processing chamber can be used to add extra moisture, but not to remove excess moisture. A load with organic products having high moisture content will lead to the processed fraction being too thin. A fraction that it too thin will cause the solid material of the packaging units to float and allow this to float at various locations inside the separation system. To prevent this, the drainage installation in the screw conveyor can remove the excess moisture before the load of packaging units reaches the unpacking device. This can correct for too high as well as too low moisture content within the separating system.

In a further embodiment, the drainage system is a grid inside the liquid-tight channel, and the method further includes:
- opening the grate during the processing of packaging units with a high moisture content; or
- closing the grate during the processing of packaging units with a low moisture content.

A second aspect of the invention relates to an unpacking device for separating packaging units comprised of a package, such as a box, as well as agricultural, farm or horticultural products accommodated in the package, in a separate waste stream for packaging materials and a separate discharge stream for the organic material of the agricultural/pasture/horticultural products. The unpacking device includes a processing chamber equipped with:
- an intake opening on a top side of the processing chamber and adapted for the intake of the packaging units;
- a first output opening adapted for removing the separated packages from the processing chamber;
- a curved sieve on a bottom side of the processing chamber, and
- a second output opening with an output hopper on the bottom side of the processing chamber and adapted for removing the organic pulp from the processing chamber.

The unpacking device comprises:
- a decomposition mechanism, accommodated in the processing chamber and adapted to open packaging units and transform the organic products into the organic pulp, and
- an output system, equipped with a pump unit and a first conduit for transporting the organic pulp away from the processing chamber.

The decomposition mechanism may be provided with an axle-shaped rotator body that extends along a centre-line and that is suspended in a rotatable manner about this centre-line inside the processing chamber, and with spoon-shaped processing members that are attached to the rotator body and extend radial from the rotator body and which together with the rotator body, rotate via an actuator to open the packaging units and to press the released agricultural/farm/horticultural products against the curved sieve to create the organic pulp.

The unpacking unit is characterized by the fact that the first conduit of the discharge assembly connects to a branch where the first conduit splits into an output conduit and a recirculation conduit, and by the fact that the unpacking device also has a valve control system for supplying in a regulated manner a pulp circulation stream to the processing chamber via the top side in order to increase the moisture content of the organic pulp that is moving from the processing chamber through the curved sieve, the output hopper, and the further sieve. The curved sieve may for example be a cylinder shaped sieve, which is installed stationary with regard to the processing chamber and concentric to the centre-line around the axle-shaped rotator body and the spoon-shaped processing members.

In one embodiment of the unpacking device, the recirculation conduit from the discharge assembly is equipped with a manifold where the recirculation conduit splits into a number of conduit branches that are at sequential positions along the centre-line in liquid connection with the processing chamber, whereby each conduit branch is equipped with an individually adjustable valve, and whereby the valves can individually be opened or closed to supply fractions of the circulation stream at selected downstream positions along the centre-line into the processing chamber.

In one embodiment, a central axis of the first conduit and a central axis of the output conduit are located at the level of the branch in each other's length, and the branching is formed by an opening in the top of the first conduit. By putting an opening in the top, particles of the pump stream with a lower density may float up. These particles are easily pushed up through the recirculation conduit.

In an additional embodiment, one corner of the spoon-shaped processing members can be adjusted with regard to the centre-line of the axle-shaped rotator body, so that the speed of processing by the processing chamber can be regulated.

According to a third aspect of the invention, there is provided a separation system including an unpacking device according to the second aspect of the invention. The separation system further includes a screw conveyor that is adapted for conveying the packaging units with agricultural/farm/horticultural products to the intake opening of the unpacking device. The screw conveyor further includes:
- a hopper, positioned on a bottom side of the screw conveyor for receiving the packaging units;
- a screw body for transporting the packaging units along an at least partially liquid-tight channel to the top end of the screw conveyor, and
- a drainage system for removing excess moisture from the at least partially liquid-tight channel.

In one embodiment, the separation system also has a conveyor belt for transporting packages that can be transported out of the processing chamber through the first output opening. A collection container can be positioned at the end of the conveyor belt to collect the waste stream of packages.

### Brief Description of the Drawings

The invention will now be described using the exemplary embodiments illustrated in the figures.
Figure 1 shows a side view of the separation system for use with the method according to one embodiment.
Figure 2 shows a perspective view of the unpacking device in figure 1.
Figure 3a shows a side view of figure 2 and figure 3b shows a cross section of figure 3a.
Figure 4 illustrates a top view of the unpacking device in figures 2 and 3a.
Figure 5 shows a detailed view of the drainage system.
Figure 6 shows a side view of a second embodiment of an unpacking device.

The figures are only intended for illustrative purposes, and do not limit the scope of protection defined by the claims.

### Description of Embodiments

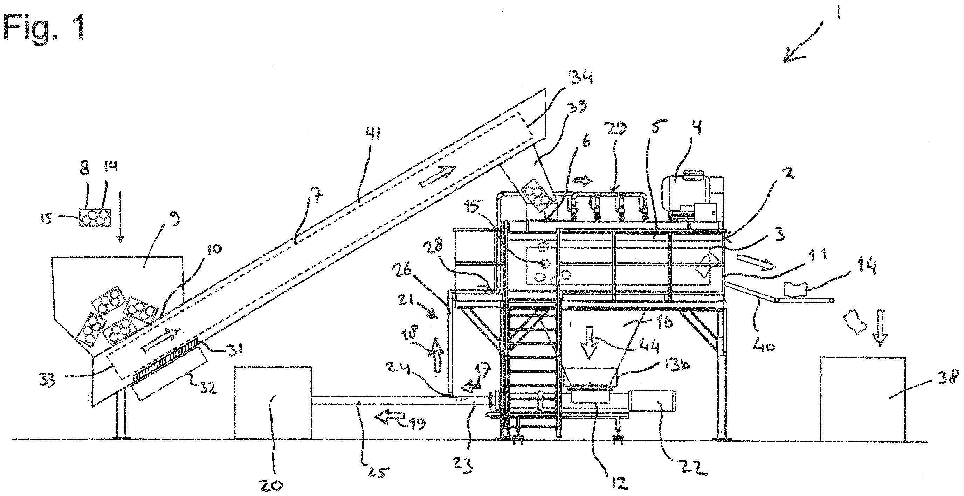

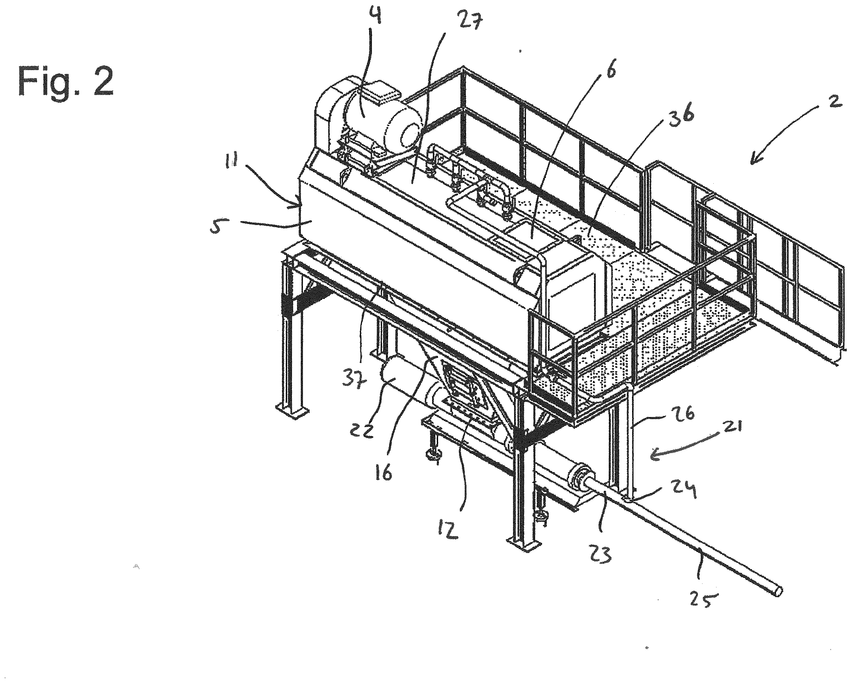

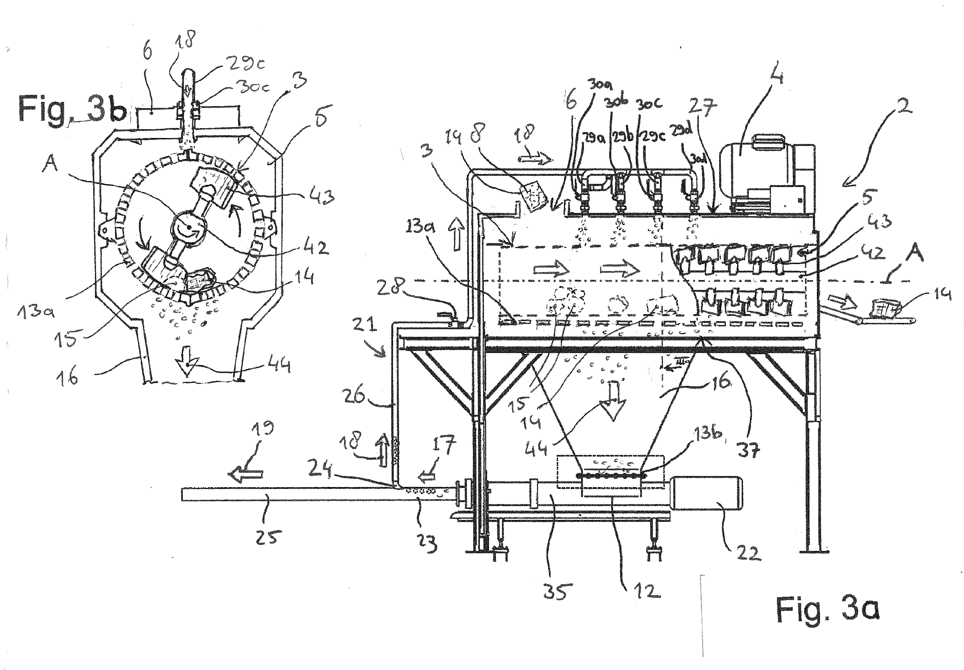

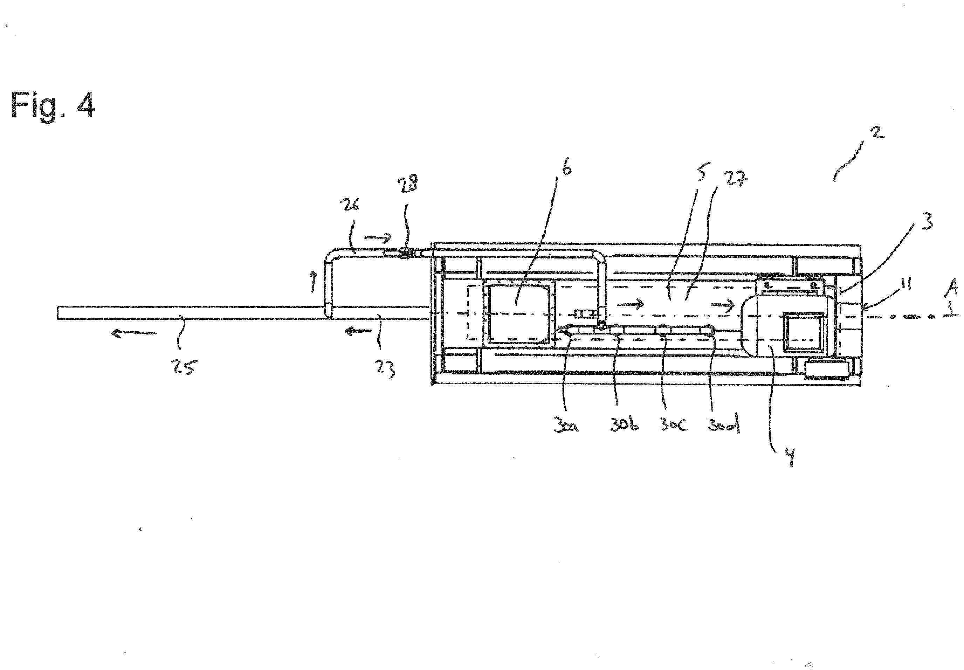

Figure 1 shows a separation system 1 for processing packaging units 8 comprised of a package 14, such as a box, as well as the organic products 15 enclosed in the package 14, such as agricultural, pasture or horticultural products. Figure 1 shows an example system 1 in which packaging units 8 are intake, which are comprised of multiple products 15 in a common package 14. It will be clear, however, that the intake and processing of products that are contained individually in their own packaging, or intake and processing of units formed of multiple individually packaged products that are included in an additional packaging (such as a number of individually shrink-wrapped cucumbers that are packaged together in an outer box) are also possibilities. The separation system 1 comprises an unpacking unit 2 which is illustrated in more detail in figures 2-4. Around the unpacking unit 2 there is an operating platform 36 that is left out in figures 3a and 4 for clarity.

A lot of packaging units 8 is presented to the separation system 1 via a hopper 9. This hopper 9 has an opening 10 on the bottom side through which the packaging units 8 can pass. A screw conveyor 7 takes the packaging units 8 from the bottom of the hopper 9 and transports them in a continuous movement up toward an unpacking unit 2. The packages 8 are then moved to the bottom side 33 of the screw conveyor 7 to the top end 34. The screw conveyor 7 is installed in a channel 41 that is impermeable on the bottom.

As soon as the packaged material 8 reaches the top end 34 of the screw conveyor 7, the packaging 8 will reach an intake opening 6 on the top 27 of the unpacking unit 2 via a connector 39. By force of gravity, the packaging unit 8 falls through the connector 39 and the opening 6. In this way, the packaging unit 8 enters the processing chamber 5 of the unpacking machine 2.

Within the processing chamber 5, there is a decomposition mechanism 3 that is adapted to break the packaging units 8, open them, unfold them or otherwise process them as long as the result is that the organic products 15 are removed from the packages 14. The decomposition mechanism 3 shown in this example has an axle-shaped rotator body 42 that extends along a centre-line A (figures 3a-b), and that is hung around this centre-line A in a rotatable manner within the chamber 5. A number of spoon-shaped processing members 43 are attached to this rotator body 42. These spoon-shaped processing members 43 protrude mainly radially from the rotator body 42 and can also be oriented at adjustable angles from the rotator body 42 to regulate the speed of processing by the processing chamber 5. A drive unit 4 drives the rotator body 42 with spoon-shaped processing members 43 via a multi-belt.

The opening 6 is located near a first side of the processing chamber 5. The decomposition mechanism 3 is further adapted to transport the open packages 14 in a downstream direction parallel to the centre-line A towards a second side of the processing chamber 5 that lies opposite first side. This transport takes place using the spoon-shaped processing members 43 in the decomposition mechanism 3, which moves the packages 14 using a type of screw conveyor. On the second side of the processing chamber 5, downstream along the centre-line A, there is a first output opening 11 that is adapted for removing the separated packages 14 from the processing chamber 5. In an alternative embodiment, this output opening 11 can also be located on the back lower side of the chamber 5.

The empty packages 14 are transported through the first output opening 11 and land on a conveyor belt 40. This conveyor belt 40 transports the packages 14 further to a collection bin 38 for packaging material.

At the same time, the spoon-shaped processing members 43 of the decomposition mechanism 3 pulverize the organic products 15 into a pulp 44. This pulp 44 is removed via an output hopper 16 and will be pressed through a further sieve 13b that is located at the outlet of the output hopper 16. Then the pulp 44 is collected in an underlying collection space 35. Due to the organic character of the products 15 to be recycled (from agriculture, pasture or horticulture), the pulp 44 will also contain moisture (including vegetal cell fluid, other types of fluids, and/or condensation water). Figures 3a-b illustrate that there is a curved sieve 13a installed directly on or near the bottom side 37 of the chamber 5, against which the products 15 are pressed by the spoon-shaped processing member 43 of the rotator body 42. Figure 3b shows that the curved sieve 13a can be a cylinder-shaped sieve 13a, which is suspended inside and stationary relative to the processing chamber 5, and which is positioned concentrically with the centre-line A and around the axle-shaped rotator body 42 and the spoon-shaped processing members 43. Packaging units 8 that fall into the processing chamber 5 via the opening 6 end up in a space surrounded by this curved sieve 13a. By the rotation of the rotator body 42 and the processing members 43 against the curved sieve 13a, these packaging units 8 are opened and the released products 15 are pressed against the (stationary) curved sieve 13a and pressed through it, whereby these products 15 are pulverised and transformed into organic pulp 44. Simultaneously, the open packages 14 are transported in a downstream direction along the centre-line A towards the output opening 11. This downstream transport is also facilitated by the rotation of the rotator body 42 with processing members 43 toward the stationary curved sieve 13a, there the spoon-shaped processing members 43 are at an angle to the rotator body 42 so that the rotator body 42 with the processing members 43 acting via a screw movement on the open packages 14 within the chamber 5 in the direction of the output opening 11.

From the collection space 35, the pulp 44 is transported via a conveyor system 21. This conveyor system 21 is equipped with a pump unit 22 that pumps the pulp 44 through a first conduit 23. The first conduit 23 connects to a branch 24 where the first conduit 23 branches into an outlet conduit 25 and a recirculation conduit 26. In this way, the pulp stream 17 pumped through the first conduit 23 is split into a pulp circulation stream 18 that runs through the recirculation conduit 26 and a pulp output stream 19 that runs through output conduit 25.

The output conduit 25 transports the pulp output stream 19 further to a reservoir 20. This reservoir 20 can have various forms and functions and is only illustrated schematically. The reservoir 20 may for example serve for temporary storage of the output stream 19, but the reservoir 20 can also be a fermentation silo that has the function of producing green gas from the organic output stream 19.

The recirculation conduit 26 transports the pump circulation stream 18 back toward the top side 27 of the processing chamber 5. The circulation stream 18 can be regulated by a separate pump, but this is not necessary. In the embodiment illustrated, the circulation stream 18 is not controlled by a separate pump, but this stream is transported by the pressure built up by the organic products 15 and the pulp 44 in the machines output hopper 16 and by the pump unit 22. A difference in pressure between the first conduit 23 (higher pressure) and the outstream section 29 of the recirculation conduit 26 near the chamber 5 (lower pressure) thus forces the circulation stream 18 towards the outstream section 29, such that the recirculation conduit 26 acts as a riser pipe.

The circulation stream 18 serves to increase the moisture content in the processing chamber 5. If the moisture content is too low, the additional sieve 13b under the output hopper 16 (or the curved sieve 13a) may become clogged. The circulation stream 18 is therefore specifically intended for adding moisture from the processing process of products with a relatively low moisture content and is preferably not used if products with a high moisture content are present in the processing chamber 5. However, through continuous input of packaging units 8 into the unpacking unit 2, the pump unit 22 will also continually work to pump the output stream 19 to the reservoir 20. Blocking the recirculation conduit 26 ensures that there is no circulation stream if this is not desired. For this, the invention is equipped with a number of valves 28, 30 that can be used to add the circulation stream 18 to the chamber 5 in a regulated manner.

First, the circulation stream 18 can be regulated using a main valve 28, which in the embodiment described can be operated manually and is accessible to an operator via an operation platform 36. The main valve 18 can integrally regulate the magnitude of the circulation stream 18 by varying the position of the main valve 18. This position can be changed between a fully closed position in which the recirculation conduit 26 is completely cut off and the circulation stream 18 cannot stream, and a fully open position in which the recirculation conduit 26 is fully open and the circulation stream is at a maximum. The closed position will, for example be used when a product with a high moisture content is processed, such as grapes, cucumbers, watermelons, celery, strawberries, pears or citrus fruits. The open position will, for example, be used when products with a relatively low moisture content are processed, such as a package containing sweet potatoes, coconuts, broccoli, or carrots. The main valve 28 can also be placed in a number of intermediate positions, through which the circulation stream 18 can partially stream. This type of intermediate position may, for example, be used for products with a moderate or average moisture content, such as apples, lettuce, or bananas.

Secondly, the circulation stream 18 can be regulated using four valves on the top of the processing chamber 5. The recirculation conduit 26 is not directly fed into the processing chamber 5 of the unpacking unit 2 but passes a distribution piece that splits the recirculation conduit into a number of conduit branch 29a, 29b, 29c, 29d. These branches 29 are located on the top 27 of the processing chamber 5, between the opening 6 and second side.

The stream through each of the conduits 29 can be regulated individually using four valves 30a, 30b, 30c, 30d. In this embodiment, the valves 30 can be manually opened or closed by an operator. These valves 30 too are accessible via the operating platform 36. The valves 30 are each individually adjustable and can be opened or closed to input lots of the circulation stream 18 into the chamber 5 at selected downstream positions along the centre-line A. Through this, the moisture content of the separation and pulping process within the chamber 5 can be regulated individually at different positions along the centre-line A.

The pulp circulation stream 18 can only add moisture, and products with a very high moisture content such as grapes or watermelons can also cause problems in the unpacking unit 2. If the separation system 1 must also be suitable for processing these types of products, it can be equipped with an extra drainage system 31 at a location before the packaging unit 8 enters the unpacking unit 2 via the opening 6. For removing such excess moisture, there is a drainage system 31 on the bottom of the input screw conveyor 7. This drainage system 31 ensures that an excess of moisture in the packaging units 8 can be removed before the packaging units 8 enter the unpacking unit 2.

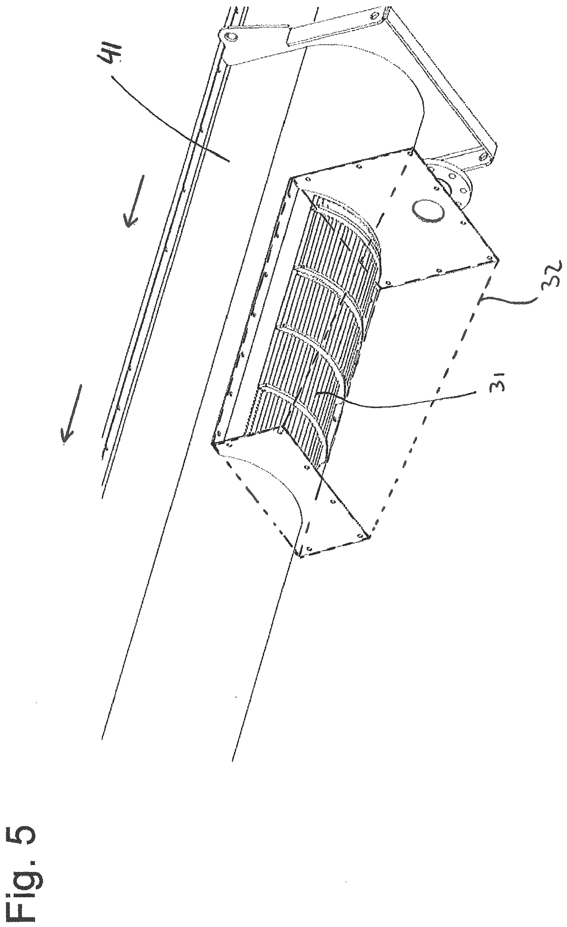

The drainage system 31 is schematically illustrated in figure 1 and in more detail in figure 5. In this example, the drainage system 31 has a grate in the at least partially liquid-tight channel 41, which has a screen that can be opened or closed by the operator as they wish. When very wet material is input, the screen will be opened, while for very dry material, the screen will be closed. The operation of the opening and closing of the grate can occur manually and automatically. The moisture is collected in a collection bin 32 under the drainage system 31. In some embodiments, this moisture can also be transported towards the unpacking unit 2, but in the illustrated embodiment, the collected moisture is removed from the separation system 1 via the collection bin 32.

An operator of the separation system 1 can influence the moisture regulation of the system by adjusting the positions of the main valve 28 and valves 30 together, if necessary in combination with the drainage system 31, such that the lot in the processing chamber 5 has a moisture content that can be easily processed. This means that the lot cannot be too dry because the curved sieve 13a and/or the additional sieve 13b may become clogged and may not be too wet because products with a relatively low mass density (such as grapes or strawberries) may float and cannot effectively be grabbed by the decomposition mechanism 3.

Examples of system that can be used by an operator depending on the organic product 15 to be processed are listed in the table below. The percentages for the main valve 28 and the valves 30 refer to a percentage of the output that is still to be passed through with regard to the maximum realizable pulp stream through the recirculation conduit 26 or respective distribution branch 29. The percentage of the grate 31 refers to a reduction of the surface of the grate 31.

| **Product 15** | **Grid 31** | **Main valve 28** | **Valve 30a** | **Valve 30b** | **Valve 30c** | **Valve 30d** |
|---|---|---|---|---|---|---|
| Grapes | Open | Close | Close | Close | Close | Close |
| Cucumber | 50% | Close | Close | Close | Close | Close |
| Watermelon | Open | Close | Close | Close | Close | Close |
| Sweet potatoes | Close | Open | 50% | Open | Open | Open |
| Celery Root | Close | Close | Close | Close | Close | Close |
| Watercress | Close | Open | Open | Open | Open | Open |
| Strawberry | Open | Close | Close | Close | Close | Close |
| Coconut | Close | 50% | Open | Open | Open | Open |
| Apples | Close | 50% | Open | Open | Open | Open |
| Pears | Open | Close | Close | Close | Close | Close |
| Lettuce | Close | 25% | Open | Open | Open | Open |
| Pomegranate | Open | Close | Close | Close | Close | Close |
| Broccoli | Close | 75% | Open | Open | Open | Open |
| Cherry tomatoes | Open | Close | Close | Close | Close | Close |
| Beans | Close | 75% | Open | Open | Open | Open |
| Eggplant | Open | Close | Close | Close | Close | Close |
| Lime | Open | Close | Close | Close | Close | Close |
| Orange | Open | Close | Close | Close | Close | Close |
| Banana | Close | 25% | Open | Open | Open | Open |
| Bell peppers | Open | Close | Close | Close | Close | Close |
| Carrots | Close | Open | 50% | Open | Open | Open |
| Ui | Open | Close | Close | Close | Close | Close |

With this type of setting plan, the moisture content in the processing chamber 5 and output hopper 16 can be regulated so that it is not necessary to adjust the sieve 13a, 13b depending on the products 15 introduced.

The illustrated embodiment is equipped with two sieves 13a, 13b. The lower sieve 13b also has the objective of protecting the pump set up 22. The sieve 13b is net-shaped and has square openings with a set mesh width of 20 mm. In other embodiments, the lower sieve 13b can also have a different mesh width between 10 mm and 30 mm. The curved sieve 13a can have this type of mesh width, but can also be another type of sieve with, for example, larger openings that only have the goal of keeping the packages 14 outside of the output hopper 16.

In situations it may also be possible to replace the curved sieve 13a and/or the additional sieve 13b by a curved sieve 13a and/or an additional sieve 13b with another mesh width or replacement. The moisture circulation according to the invention in any case has the effect that this is less necessary, so the time is reduced in which the unpacking unit 2 is down to replace the sieves 13a and/or 13b.

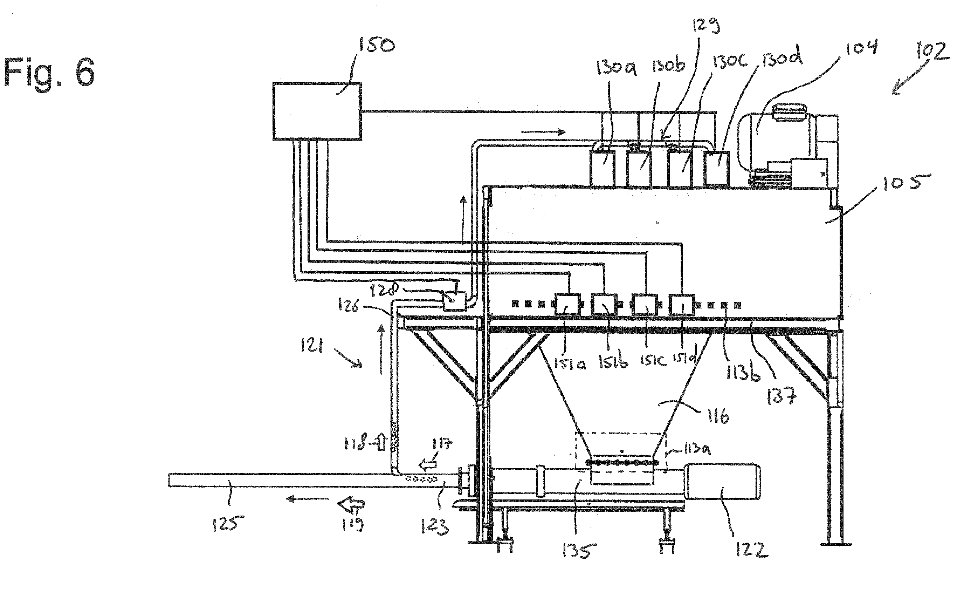

In a second embodiment, the regulation of the moisture percentage in the separation system 1 can also be done automatically. Figure 6 shows such an embodiment. Characteristics of the unpacking device discussed above in connection with the first embodiment can also be present in the second embodiment. These types of element have received equivalent reference numbers, starting with 100 to differentiate the embodiments.

In the second embodiment, the valves 130 are automatically individually adjustable by a computer-driven control unit 150. The control unit 150 controls a number of actuators which are connected to the valves 130. Parallel to the nominal axis A, a number of sensors 151a, 151b, 151c, 151d are placed which measure the local moisture level. In doing so, measured variations in moisture content can be used by the processing chamber 105 and/or along the sieve 113a or 113b for the dynamic adjustment of the main valve 128 and valves 130. The values measured by the sensors 151 are collected by the control unit 150, which controls an actuator for the main valve 128 and individual actuators of the valves 130.

In an additional embodiment, the adjustment unit 150 can also be linked to an actuator to regulate the opening and closing of a drainage system (not shown).

### List of Reference Numbers

- 1: separation system
- 2: unpacking device
- 3: decomposition mechanism
- 4: actuator apparatus
- 5: processing chamber
- 6: input opening
- 7: transport screw
- 8: packaging unit
- 9: hopper
- 10: opening hopper
- 11: first outlet opening
- 12: second outlet opening
- 13a: curved sieve
- 13b: further sieve
- 14: packaging
- 15: organic products
- 16: outlet hopper
- 17: pulp stream
- 18: circulation stream
- 19: output stream
- 20: reservoir
- 21: output assembly
- 22: pump device
- 23: first conduit
- 24: branch
- 25: output conduit
- 26: recirculation conduit
- 27: top side of processing chamber
- 28: main valve
- 29a-d: branches
- 30a-d: valve
- 31: drainage system
- 32: storage unit
- 33: bottom end
- 34: top end
- 35: storage space (for pulp)
- 36: operating platform
- 37: bottom side of processing chamber
- 38: storage space (for packaging material)
- 39: connector
- 40: transport belt
- 41: liquid-tight channel
- 42: rotator body
- 43: spoon-shaped processing members
- 44: organic pulp
- 50: control unit
- 51a-d: sensor
- A: centre-line

## Claims

1. A method for separating packaging units (8) comprised of a package (14), such as a box, as used in the packaging of agricultural, farming or horticultural products (15), into a separate waste stream for packaging material and a separate discharge stream for the organic material from the agricultural, farming or horticultural products using a separation system (1) with an unpacking device (2), wherein the unpacking device (2) comprises:
- a processing chamber (5) provided with:
- an intake opening (6) on a top side (27) of the processing chamber (5) and adapted to supply the packaging units (8);
- a first output opening (11) adapted to discharge separated packages (14) from the processing chamber (5),
- a curved sieve (13a) on a bottom side (37) of the processing chamber (5);
- a second output opening (12) with an output hopper (16) on the bottom side (37) of the processing chamber (5) and adapted to discharge the organic pulp (44) from the processing chamber (5);
- a decomposition mechanism (3) accommodated in the processing chamber (5) and adapted to open packaging units (8) and to transform the released agricultural, farming, horticultural products into the organic pulp (44), whereby the decomposition mechanism (3) has an axle-shaped rotator body (42) that extends along a centre-line (A) and is suspended in a rotatable manner about this centre-line (A) inside the processing chamber (5), and has spoon-shaped processing members (43) that are attached to the rotator body (42) and extend radially from the rotator body (42);
- an output assembly (21) provided with a pump device (22) and a first conduit (23) for transporting the organic pulp away from the processing chamber (5);
wherein the method comprises:
- supplying the packaging units (8) through the intake opening (6) into the processing chamber (5);
- actuating the rotator body (42) with the spoon-shaped processing members (43) to open the packages (14) of the packaging units (8) and to remove the agricultural/pasture/horticultural products (15) from the packages, to pulverise the products (15) released by using the spoon-shaped processing members (43) of the rotator body (42) to push the agricultural/pasture/horticulture products (15) against the curved sieve (13a) to create an organic pulp (44), and to simultaneously move the opened packages (14) in a downstream direction along the centre-line (A) towards the first output opening (11) by means of screw movement of the spoon-shaped processing members (43);
- transporting the opened packages (14) through the first output opening (11) out of the processing chamber (5);
- transporting the organic pulp (44) out of the processing chamber (5) via the output hopper (16) and through a further sieve (13b), and collecting the organic pulp in an underlying storage space (35);
- actuating the pump device (22) to move the organic pulp out of the storage container (35), forming a stream of pulp (17) through the first conduit (23);
wherein the first conduit (23) of the output assembly (21) connects to a branch (24) where the first conduit (23) branches into an outlet conduit (25) and a recirculation conduit (26); and wherein the process further involves:
- splitting the pulp stream (17) at the level of the branch (24) into a pulp discharge stream (19) and a pulp circulation stream (18);
- removing the pulp discharge stream (19) through the outlet conduit (25) for further processing outside of the separation system (1);
- returning the pulp circulation stream (18) through the recirculation conduit (26) to the top side (27) of the processing chamber (5);
- supplying, in a regulated manner, the pulp circulation stream (18) to the processing chamber (5) via the top side (27), in order to increase the moisture content of the organic pulp (44) that is moving from the processing chamber (5) through the curved sieve (13a), the output hopper (16), and the further sieve (13b).

2. The method according to claim 1, wherein the recirculation conduit (26) of the output assembly (21) is provided with a manifold where the recirculation conduit (26) splits into a plurality of conduit branches (29a, 29b, 29c, 29d) that are at sequential positions along the centre-line (A) in fluid connection with the processing chamber (5), whereby each conduit branch is provided with a valve (30a, 30b, 30c, 30d) that is individually adjustable, and whereby the method further comprises:
- selectively opening or closing the valves (30a, 30b, 30c, 30d) to supply fractions of the pulp circulation stream (18) at selected downstream positions along the centre-line (A) into the processing chamber (5).

3. The method according to claim 2, wherein each valve (30a, 30b, 30c, 30d) is positionable in at least one intermediate position between the fully opened and fully closed positions in order to influence the ratios of the fractions.

4. The method according to one of the previous claims, whereby the recirculation conduit (26) of the output assembly (21) includes a main valve (28) for integrally regulating a magnitude of the pulp circulation stream (18), whereby the method further comprises:
- operating the main valve (28) by varying the position of the main valve (28) between a fully closed position in which the circulation conduit (26) is completely closed off and the pulp circulation stream (18) cannot flow, and a fully open position in which the recirculation conduit (26) is completely open and the pulp circulation stream (18) can flow at maximum, whereby the main valve (28) can also be placed in at least one intermediate position between the fully open and fully closed positions in which the pulp circulation steam (18) can partially flow.

5. The method according to claim 4, comprising positioning the main valve (28) in the fully closed position when processing the packaging units (8) with the agricultural/pasture/horticultural products (15) with a relatively high moisture content, for example selected from the group of grapes, cucumbers, watermelons, celery, strawberries, pears, and citrus fruits.

6. The method according to claim 4, comprising positioning the main valve (28) in the fully open position or in the at least one intermediate position, and selectively opening the valves (30a, 30b, 30c, 30d) during the processing of the packaging units (8) with the agricultural/pasture/horticultural products (15) with a relatively high dry component, for example selected from the group of sweet potatoes, coconuts, broccoli and carrots.

7. The method according to one of the preceding claims, wherein returning the pulp circulation stream (18) through the recirculation conduit (26) to the top side (27) of the processing chamber (5) occurs under influence of the pump device (22).

8. The method according to one of the claims 1-7, comprising:
- providing a screw conveyor (7) configured to supply the packaging units (8) with agricultural, farming or horticultural products (15) to the intake opening (6) of the unpacking device (2), wherein the screw conveyor (7) is provided at a lower end (33) with a hopper (9) for receiving the packaging units (8), and with a screw body for moving the packaging units along an at least partially liquid-tight channel (41) towards a top end (34) located above the intake opening (6), and wherein the screw conveyor (7) includes a drainage system (31) for removing excess moisture from the at least partially liquid-tight channel (41);
- placing the packaging units (8) via the hopper (9) onto the screw conveyor (7);
- rotating the screw body and thereby transporting the packaging units (8) from the lower end (33), along the at least partially liquid-tight channel (41), towards the intake opening (6);
- extracting, via the drainage system (31), excess moisture during transporting of the packaging units (8),
- collecting excess moisture extracted via the drainage system (31) in a collection container (32).

9. The method according to claim 8, in which the drainage system (31) has a grate in the at least partially liquid-tight channel (41), and wherein the method further comprises:
- opening the grate during the processing of packaging units (8) with high moisture content; or
- closing the grate during the processing of packaging units (8) with low moisture content.

10. An unpacking device (2) for separating packaging units (8) comprised of a package (14), such as a box, as well as agricultural, pasture, or horticultural products (15) accommodated in the package, into a separate waste stream for packaging material and a separate discharge stream for the organic material from the agricultural, pasture, or horticultural products, whereby the unpacking device comprises:
- a processing chamber (5) equipped with:
- an intake opening (6) on a top side (27) of the processing chamber (5) and adapted for inputting the packaging units (8);
- a first output opening (11) adapted for removing the separated packages (14) from the processing chamber (5),
- a curved sieve (13a) on a bottom side (37) of the processing chamber (5);
- a second output opening (12) with an output hopper (16) on the bottom side (37) of the processing chamber (5) and adapted for removing the organic pulp (44) from the processing chamber (5);
- a decomposition mechanism (3) comprising an axle-shaped rotator body (42) that extends along a centre-line (A) and that suspended in a rotatable manner about this centre-line (A) inside the processing chamber (5), and spoon-shaped processing members (43) that are attached to the rotator body (42) and extend radially from the rotator body (42), and which together with the rotator body (42) are rotatable by means of an actuator (4) in order to open the packaging units (8) and to press the released agricultural/pasture/horticultural products against the curved sieve (13a) to create the organic pulp (44);
- an output assembly (21) provided with a pump device (22) and a first conduit (23) for transporting the organic pulp (44) away from the processing chamber (5);
wherein the first conduit (23) of the output assembly (21) connects to a branch (24) where the first conduit (23) splits into an output conduit (25) and a recirculation conduit (26), and wherein the unpacking device (2) further comprises a valve control system (28,29,30) for supplying in a regulated manner a pulp circulation stream (18) to the processing chamber (5) via the top side (27) in order to increase a moisture content of the organic pulp (44) that is moving from the processing chamber (5) through the curved sieve (13a), the output hopper (16), and a further sieve (13b).

11. The unpacking device (2) according to claim 10, wherein the recirculation conduit (26) of the output assembly (21) is provided with a manifold where the recirculation conduit (26) splits into a number of conduit branches (29a, 29b, 29c, 29d) that are at sequential positions along the centre-line (A) in liquid connection with the processing chamber (5), whereby each conduit branch is provided with an individually adjustable valve (30a, 30b, 30c, 30d), and whereby the valves (30a, 30b, 30c, 30d) can individually be opened or closed in order to supply fractions of the circulation stream (18) at selected downstream positions along the centre-line (A) into the processing chamber (5).

12. The unpacking device (2) according to claim 10 or 11, whereby a central axis of the first conduit (23) and a central axis of the output conduit (25) lie along each other's length at the level of the branch (24), and whereby the branch (24) is an opening in the top side (27) of the first conduit (23).

13. The unpacking device according to one of the claims 10-12, whereby an angle of the spoon-shaped processing members (43) relative to the centre-line (A) of the axle-shaped rotator body (42) can be adjusted in order to regulate the speed of processing through the processing chamber (5).

14. A separation system (1) with an unpacking device (2) according to one of the claims 10-13, further comprising:
- a screw conveyor (7) adapted for transporting the packaging units (8) with agricultural, farming or horticultural products (15) towards the intake opening (6) of the unpacking device (2), the screw conveyor (7) comprising:
- a hopper (9), positioned on a bottom side of the screw conveyor (7) for receiving the packaging units (8);
- a screw body for transporting the packaging units along an at least partially liquid-tight channel (41) towards the top end (34) of the screw conveyor (7), and
- a drainage system (31) for extracting excess moisture from the at least partially liquid-tight channel (41).

15. The separation system (1) according to claim 14, further comprising:
- a conveyor belt (40) for transporting away packages (14) which can be discharged from the processing chamber (5) through the first output opening (11).
